# EUROPÄISCHE PATENTANMELDUNG

(11) **EP 1 180 445 A1**
(43) Veröffentlichungstag der Anmeldung: **20.02.2002**
(21) Anmeldenummer: 01119094.9
(22) Anmeldetag: 08.08.2001
(51) Int. Cl.: B60J 7/043

(54) **Fahrzeugdach mit einem Schiebedeckel**

(30) Priorität: 16.08.2000 DE 10040597
(71) Anmelder: Webasto Vehicle Systems International GmbH, 82131 Stockdorf (DE)
(72) Erfinder: De Gaillard, Francois, 85390 Mouilleron en pareds (FR)
(74) Vertreter: Konnerth, Dieter Hans

(57) **Zusammenfassung**

Die Erfindung betrifft ein Fahrzeugdach mit einem an Führungen (6, 7) längs verschiebbar gelagerten Deckel (2) zum wahlweisen Schließen oder zumindest teilweisen Öffnen einer Dachöffnung (8), wobei jeweils eine mit dem Deckel (2) gekoppelte Lagervorrichtung (4, 5) an der jeweiligen Führung (6, 7) verschiebbar gelagert und von einem Antrieb (15) antreibbar ist und die Führungen (6, 7) zumindest abschnittsweise nichtparallel zueinander verlaufen, wobei jede Lagervorrichtung einen Schwenklenker (33) aufweist, der einerseits am Deckel (2) um eine deckelfeste Schwenkachse (26, 34) schwenkbar gelagert und andererseits mit einem Mitnehmerelement (13) gekoppelt ist, das an der jeweiligen seitlich der Dachöffnung (8) angeordneten Führung (6, 7) verschiebbar gelagert und von dem Antrieb (15) antreibbar ist.

## Beschreibung

Die Erfindung betrifft ein Fahrzeugdach mit einem an Führungen längs verschiebbar gelagerten Deckel zum wahlweisen Schließen oder zumindest teilweisen Öffnen einer Dachöffnung, wobei jeweils eine mit dem Deckel gekoppelte Lagervorrichtung an der jeweiligen Führung verschiebbar gelagert und von einem Antrieb antreibbar ist und die Führungen zumindest abschnittsweise nichtparallel zueinander verlaufen.

Aus der DE 39 06 866 C2 ist ein Schiebedachsystem für Fahrzeuge bekannt geworden, das im Fahrzeugdach eine von einem Deckel verschließbare Dachöffnung aufweist. Der Deckel ist an zwei Führungsschienen verschiebbar gelagert, die an der Dachoberseite eines hinteren Dachabschnittes angeordnet sind und in etwa von der Dachmitte aus bogenförmig gekrümmt nach außen und nach hinten verlaufen. In jeder Führungsschiene ist ein über ein Antriebskabel antreibbarer Führungsarm verschiebbar gelagert, dessen erstes Ende über Gleitelemente an der Führungsschiene gelagert und geführt ist und dessen zweites Ende bei einer Verschiebung des Führungsarmes zum Öffnen und Schließen des Deckels entsprechend der Krümmung der Führungsschiene sich auf einer kurvenförmigen Bewegungsbahn bewegt, die in der Offenstellung des Deckels deutlich nach hinten über die Führungsschiene hinausragt. Bei dieser Bewegung verschiebt sich ein am zweiten Ende des Führungsarmes angeordnetes Eingriffsteil in einer im wesentlichen linearen Führungsschiene, die an der Unterseite des Deckels im hinteren Deckelabschnitt schräg zur Fahrzeuglängsachse angebracht ist, wobei gleichzeitig der Deckel in Fahrzeuglängsrichtung verschoben wird. Das Ausstellen der Deckelhinterkante beim anfänglichen Öffnen des Deckels erfolgt über eine Ausstellkulisse in dem Führungsarm im Bereich des ersten Endes. Eine in der Mitte der Dachöffnung in Fahrzeuglängsrichtung verlaufende dritte Führungsschiene enthält einen gleitend gelagerten Führungsschuh, der an einem zentralen Vorderabschnitt des Deckels angebracht ist und diesen in Längsrichtung führt. Die Anordnung der Führungseinrichtungen für den Deckel schließt jedoch eine größere zentrale Dachöffnung aus.

Aufgabe der Erfindung ist es, ein eingangs genanntes Fahrzeugdach mit einer Lagerung für den bewegbaren Deckel zu schaffen, die auch bei einer zentral angeordneten und von einer Rechteckform abweichenden Dachöffnung und dementsprechend bei zumindest abschnittsweise nichtparallel angeordneten seitlichen Führungsschienen eine sichere Führung des Deckels bei einfachem Aufbau bereitstellt.

Diese Aufgabe wird bei dem oben genannten Fahrzeugdach erfindungsgemäß dadurch gelöst, daß jede Lagervorrichtung einen Schwenklenker aufweist, der einerseits am Deckel um eine deckelfeste Schwenkachse schwenkbar gelagert und andererseits mit einem Mitnehmerelement gekoppelt ist, das an der jeweiligen seitlich der Dachöffnung angeordneten Führung verschiebbar gelagert und von dem Antrieb antreibbar ist. Zum Öffnen der Dachöffnung werden durch den Antrieb die Mitnehmerelemente an der linken und an der rechten Führung synchron verschoben, wobei mittels der Koppelung über die beiden Schwenklenker der Deckel in Längsrichtung verschoben wird. Dabei bewegen sich die beiden Schwenkachsen der Schwenklenker auf Geraden, auch wenn die Führungen unter einem Winkel zu dieser Geraden verlaufen und die Schwenklenker gleichzeitig gegenüber den Schwenkachsen verschwenkt werden.

Die seitlichen Führungen und somit auch die Dachöffnung und der Deckel des Schiebedaches können daher von der üblicherweise parallelen bzw. rechtwinkligen Form abweichen. Die nichtparallelen Führungen mit den sich auf den jeweils unterschiedlichen Querabstand einstellenden Lagervorrichtungen gestatten somit eine hohe gestalterische Freiheit bei der Auswahl der Form der Dachöffnungen und der Deckel für die Dachöffnungen. Die beiden Führungen können sich in Fahrzeuglängsrichtung von vorne nach hinten gegeneinander annähern oder auch voneinander entfernen. Die Länge des Schwenklenkers bestimmt dabei den möglichen Versatz der Führungsschiene in Querrichtung. Der Antrieb kann vor der Dachöffnung an einem Windlauf oder einem oberen Querholm einer Frontscheibe oder hinter der Dachöffnung an einem Dachrahmen oder an dem Dach angeordnet sein. Die Führungen enthalten zweckmäßigerweise eine jeweilige Führungsschiene, an der das Mitnehmerelement beispielsweise über eine Gleitlagerung verschiebbar gelagert ist.

Vorteilhafte Ausgestaltungen der Erfindung sind in den Unteransprüchen angegeben.

Bevorzugt ist ein den Deckel lagerndes Lagerteil des Mitnehmerelements in einer deckelfesten Ausgleichsführung verschiebbar aufgenommen. Der Deckel ruht dabei an jeder Lagervorrichtung auf dem Lagerteil des Mitnehmerelements. Für eine spielfreie Führung ist das Lagerteil in der Ausgleichsführung aufgenommen, die dem Lagerteil gestattet, seine entsprechend dem Verlauf der Führungsschiene erforderliche Querbewegung in y-Richtung gegenüber dem Deckel auszuführen.

Der Deckel kann jedoch in einer alternativen Gestaltung von einer Abstützeinrichtung getragen werden, die beispielsweise eine jeweilige Abstützung an jedem der beiden seitlichen Dachholme aufweist, auf der sich der Deckel abstützt. Der Schwenklenker und das Mitnehmerelement übertragen dann lediglich die Antriebskraft zum Längsverschieben des Deckels.

Zweckmäßigerweise ist die deckelfeste Ausgleichsführung eine konzentrisch zur deckelfesten Schwenkachse angeordnete Kreisbogenführung, so daß das mit dem Schwenklenker gekoppelte Lagerteil gleichzeitig dessen Schwenkbewegung ausführt, während es auf der Kreisbogenführung gleitet.

Wenn der Schwenklenker über ein weiteres Gleitelement an einer kreisbogenförmigen, zur Schwenkachse konzentrischen Führungsbahn geführt ist, bietet diese zusätzliche Abstützung eine verbesserte Führung des Deckels, die insbesondere in dem Fall, wenn das weitere Gleitelement um einen Winkel von etwa 90° bezüglich der Schwenkachse gegenüber dem ersten Gleitelement versetzt angeordnet ist, die Aufnahme von Querkräften bei jeder Schwenkstellung des Schwenklenkers ermöglicht und somit die lineare Verschiebebewegung des Dekkels gewährleistet.

Der Deckel kann mittels zumindest einer zusätzlichen Lagereinrichtung am Fahrzeugdach verschiebbar gelagert sein. Eine solche zusätzliche Lagereinrichtung kann einen Schwenklenker für nichtparallele und insbesondere kurvenförmig verlaufende Führungen aufweisen oder sie ist eine Längsführung, die z. B. den Deckel mittig lagert.

In einer bevorzugten Ausgestaltung ist das Lagerteil am Mitnehmer vertikal verschiebbar gelagert und eine Führungsschiene der Führungsbahn enthält einen ersten ansteigenden Bahnabschnitt zum Anheben des Lagerteils. Somit kann das den Deckel lagernde Lagerteil den Deckel auf einem ersten Öffnungsweg aus dem Kontakt mit einer Deckeldichtung anheben. Der ansteigende Bahnabschnitt kann auch als zusätzliches Bauteil neben der Führungsschiene vorgesehen sein.

Wenn auch in einer bevorzugten Ausführungsform die rechte und die linke Führung bzw. die Lagereinrichtung spiegelsymmetrisch zur Fahrzeuglängsachse angeordnet sind, so können mit der beschriebenen Lagervorrichtung auch davon abweichende Gestaltungen verwirklicht werden.

Nachfolgend werden Ausführungsbeispiele des Fahrzeugdachs unter Bezugnahme auf Zeichnungen näher erläutert. Es zeigt:
- Fig. 1: in Draufsicht in schematischer Darstellung ein Ausführungsbeispiel eines Schiebedachs mit nichtparallelen Führungen für einen Schiebedachdeckel;
- Fig. 2: in einer Draufsicht den Schiebedachdeckel mit einer Lenkeranordnung einer Lagereinrichtung;
- Fig. 3: in einer Draufsicht die Lenkeranordnung des Schiebedachdeckels;
- Fig. 4: in einer Querschnittsansicht entlang der Linie A - A in Fig. 3 das Schiebedach mit der Lenkeranordnung;
- Fig. 5: in einer perspektivischen Unteransicht den Deckel mit der Lenkeranordnung; und
- Fig. 6: in Draufsicht unterschiedliche Ausführungsbeispiele von Deckelformen des Schiebedachs.

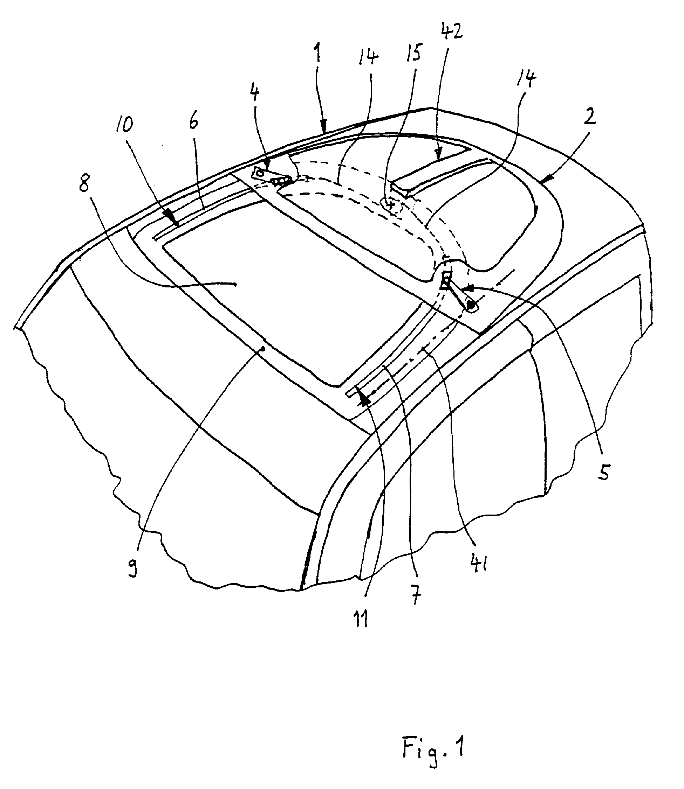

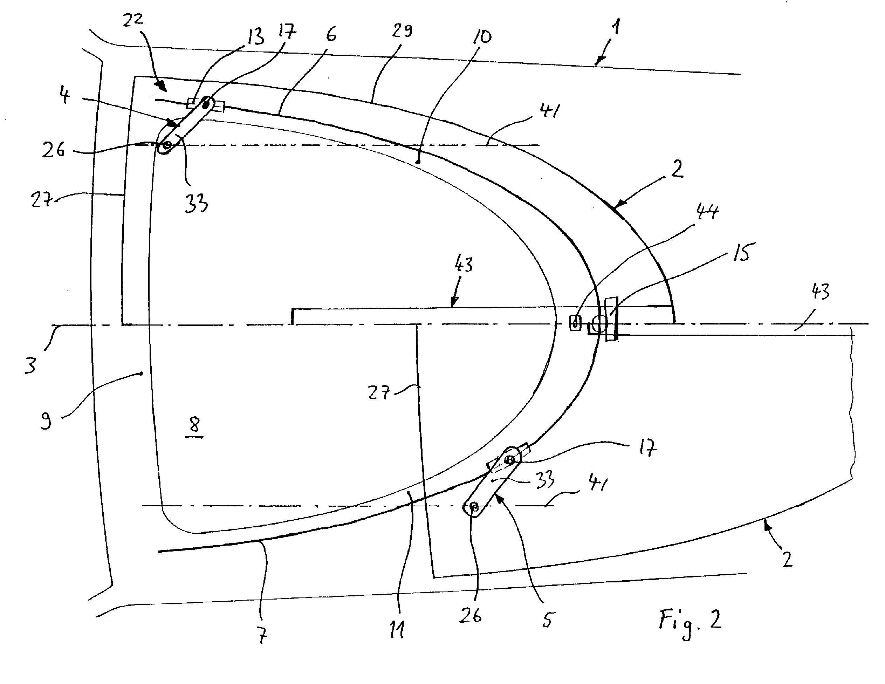

Eine Dachstruktur 1 (siehe Fig. 1 und 2) eines Fahrzeuges enthält ein Schiebedach mit einem Schiebedachdeckel 2, der bezüglich einer mittigen, vertikalen Fahrzeuglängsebene 3 über eine rechte und eine linke Lenkeranordnung 4 und 5 (in Fig. 1 und 2 schematisch dargestellt) einer Deckel-Lagervorrichtung an einer rechten bzw. einer linken Längsführung 6 bzw. 7 zum zumindest teilweisen Öffnen und zum Schließen eines Dachausschnittes 8 längsverschiebbar gelagert ist. Der Dachausschnitt 8 ist von einem Dachrahmen umgeben, der ein quer zur Fahrzeuglängsachse 3 angeordnetes Dachrahmen-Vorderteil 9 und zwei gegenüberliegende und sich nach hinten annähernde Dachrahmen-Seitenteile 10 und 11 aufweist, so daß der Dachausschnitt 8 eine in etwa dreieckige Form aufweist.

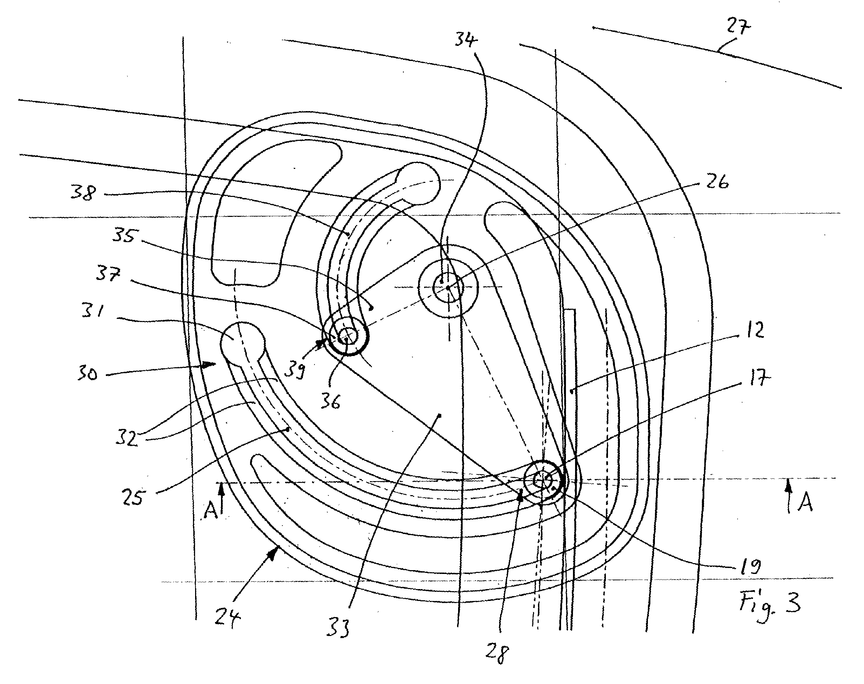

Die rechte und die linke Längsführung 6 bzw. 7 sind an den beiden Dachrahmen-Seitenteilen 10 und 11 angeordnet oder mit diesen einstückig gebildet und sind somit zumindest in ihren Hinterabschnitten nichtparallel. Der Deckel 2 ist zum Überdecken und Verschließen des Dachausschnitts 8 an dessen Dreieckform angepaßt. In Fig. 2 ist die bezüglich der Fahrzeuglängsebene 3 rechte Hälfte des Deckels 2 (die gemäß Fig. 3 obere Hälfte) in einer Schließstellung und die linke Hälfte (die gemäß Fig. 3 untere Hälfte) in einer zurückgeschobenen Offenstellung dargestellt.

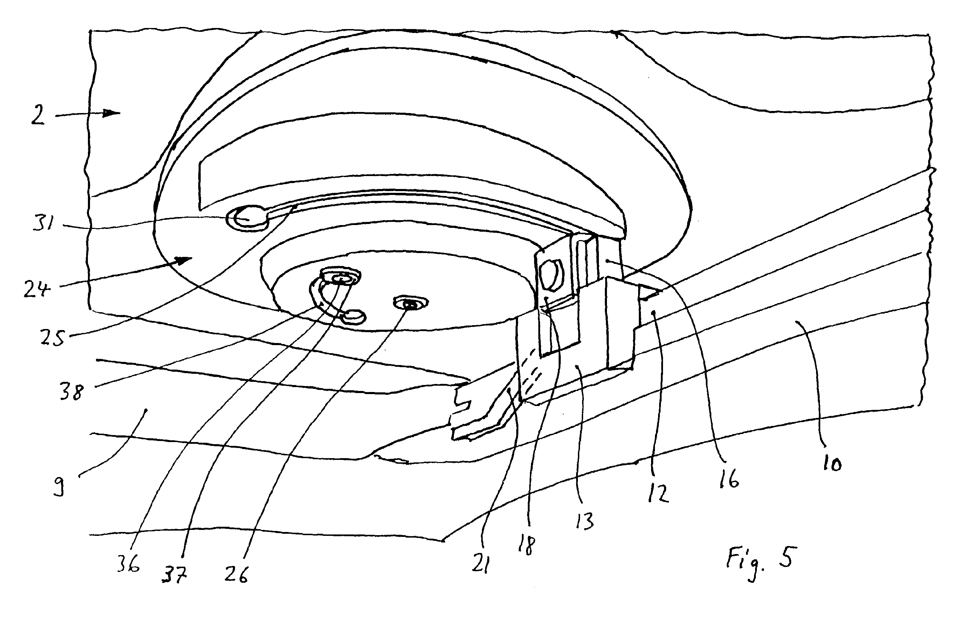

Da die rechte und die linke Lenkeranordnung 4, 5 sowie die zugeordneten Längsführungen 6 bzw. 7 jeweils zueinander spiegelsymmetrisch bezüglich der Fahrzeuglängsebene 3 angeordnet und aufgebaut sind, wird lediglich die rechte Lenkeranordnung 4 an der rechten Längsführung 6 anhand der Fig. 3 bis 5 beschrieben.

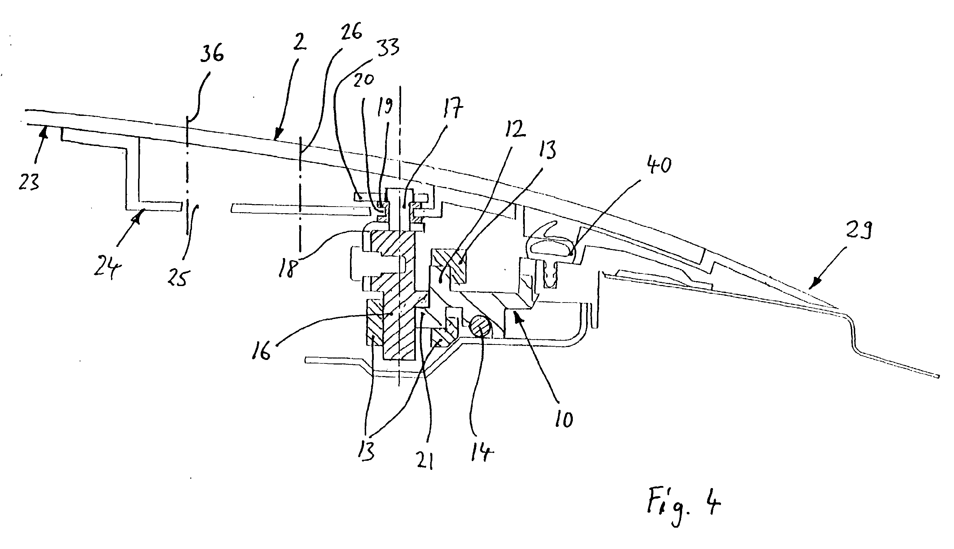

Die Längsführung 6 enthält eine am rechten Dachrahmen-Seitenteil 10 angeordnete Führungsschiene 12 (siehe Fig. 4), an der ein Mitnehmerelement 13 verschiebbar gelagert ist, das über ein Antriebskabel 14 mit einem Antriebsmotor 15 verbunden und durch diesen verschiebbar ist. An dem Mitnehmerelement 13 ist ein Hubelement 16 in senkrechter Richtung (Z-Richtung) bewegbar gelagert. Ein vom Hubelement 16 nach oben ragender Lagerzapfen 17 ist mit einem Blechbiegeteil 18 an dem Hubelement 16 befestigt. Auf dem Lagerzapfen 17 ist ein Gleitelement 19 gelagert, das beispielsweise als eine Rolle gebildet ist, die eine umlaufende Nut 20 aufweist. Das Hubelement 16 ist bei geschlossenem Schiebedachdeckel 2 in einer abgesenkten, unteren Stellung und gleitet beim Öffnen des Schiebedachdeckels 2 entlang eines ersten Verschiebewegs des Mitnehmerelements 13 auf einer ansteigenden Schulter 21 an der Führungsschiene 12 in eine angehobene obere Stellung, die es beim weiteren Öffnen des Schiebedachdekkels 2 beibehält.

In einem rechten vorderen Eckbereich 22 des Schiebedachdeckels 2, der z. B. ein Glasdeckel ist, ist an der Deckelunterseite 23 (siehe insbesondere Fig. 4) eine Lagerplatte 24 beispielsweise mittels einer Klebeverbindung angebracht ist. Die Lagerplatte 24 weist einen kreisbogenförmigen Führungsschlitz 25 auf, der sich bezüglich seines Kreismittelpunktes 26 über einen Bogenabschnitt von z. B. etwa 100° erstreckt und dessen Kreismittelpunkt 26 zwischen dem Führungsschlitz 25 und einem Vorderrand 27 des Schiebedachdeckels 2 liegt. Der Führungsschlitz 25 ist derart angeordnet, daß sich bei geschlossenem Schiebedachdeckel 2 der Lagerzapfen 17 mit dem Gleitelement bzw. der Rolle 19 an einem äußeren Ende 28 des Führungsschlitzes 25 in Richtung zum rechten Deckelrand 29 befindet. Die Breite des Führungsschlitzes 25 ist geringfügig größer wie der Durchmesser der Rolle 19 am Grund der Nut 20. Am gegenüberliegenden inneren Ende 30 des Führungsschlitzes 25 ist eine kreisförmige Erweiterung 31 ausgebildet, durch die die Rolle 19 bei der Montage zur Hälfte hindurchgesteckt wird, so daß beim anschließenden Verschieben der Rolle 19 in dem Führungsschlitz 25 die Nutflanken der Rolle 19 die an den Führungsschlitz 25 beidseitig angrenzenden Gleitbahnen 32 ober- und unterseitig umgreifen. Der Schiebedachdeckel 2 ist somit über die Lagerplatte 24, den Führungsschlitz 25 und die Gleitbahnen 32, die Rolle 19 und den Lagerzapfen 17 sowie das Hubelement 16 und das Mitnehmerelement 12 an der Führungsschiene 12 gelagert.

Die Lenkereinrichtung 4 enthält einen Schwenklenker 33, der oberhalb der Lagerplatte 24 angeordnet und einerseits über einen zum Kreismittelpunkt 26 des Führungsschlitzes 25 konzentrischen Lagerbolzen 34 an der Lagerplatte 24 und andererseits am Lagerzapfen 17 des Mitnehmerelements 13 schwenkbar gelagert ist. Der Lagerzapfen 17 ist in einer Bohrung im Schwenklenker 33 aufgenommen. Die durch den Kreismittelpunkt 26 führende Mittellinie des Lagerbolzens 34 bildet somit gleichzeitig eine am Schiebedachdeckel 2 festgelegte Schwenkachse 26 des Schwenklenkers 33.

An einem seitlichen Schenkel 35 des Schwenklenkers 33 steht ein Haltezapfen 36 nach unten gegen die Lagerplatte 24 hervor. Der Haltezapfen 36 ist bezüglich der Schwenkachse 26 um einen Winkel von etwa 90° zu der Bohrung für den Lagerzapfen 17 versetzt angeordnet (siehe Fig. 3) und trägt ein zweites Gleitelement 37, das ebenfalls als Rolle gebildet sein kann, die entsprechende der ersten Rolle 19 geformt ist. Diese zweite Rolle 37 ist in einem zweiten, inneren Führungsschlitz 38 der Lagerplatte 24 in zur ersten Rolle 19 vergleichbarer Weise aufgenommen. Der dem ersten Führungsschlitz 25 ähnlich gebildete zweite Führungsschlitz 38 ist ebenfalls kreisbogenförmig und konzentrisch zum Kreismittelpunkt 26, weist jedoch einen kleineren Radius zum Kreismittelpunkt 26 auf und ist um 90° gegenüber dem äußeren Führungsschlitz 25 derart versetzt angeordnet, daß in der gezeigten Schließstellung des Schiebedachdeckels 2 der Haltezapfen 36 bzw. die zweite Rolle 37 am entsprechenden Ende 39 des zweiten Führungsschlitzes 38 angeordnet ist.

Zum Öffnen des Schiebedachdeckels 2 wird über das jeweilige Antriebskabel 14, das über den Antriebsmotor 15 oder auch über eine Handkurbel angetrieben wird, jedes der beidseits angeordneten Mitnehmerelemente 13 an der jeweiligen Führungsschiene 12 von vorne nach hinten verschoben, wobei während der Anfangsbewegung des Mitnehmerelements 13 aus der Schließstellung heraus das Hubelement 16 und damit auch der Schiebedachdeckel 2 aus seinem Dichtkontakt mit einer Rahmendichtung 40 (siehe Fig. 4) angehoben wird.

Da die beiden Längsführungen 6 und 7 nicht parallel angeordnet sind, sondern sich zum Hinterende des Dachausschnitts 8 hin annähern (siehe Fig. 1 und 2), bewegt sich der Lagerzapfen 17 entsprechend einem geraden oder gemäß der Darstellung kurvenförmigen Verlauf der Führungsschiene 12 in dem Führungsschlitz 25 der Lagerplatte 24 einwärts und verschwenkt dabei den Schwenklenker 33 um seinen Lagerbolzen 34 bzw. die Schwenkachse 26. Die am Schwenklenker 33 gelagerte zweite Rolle 37 bewegt sich mit derselben Winkelgeschwindigkeit in dem zweiten Führungsschlitz 32. Da die beidseitigen Mitnehmerelemente 13 über das jeweilige zug- und drucksteife Antriebskabel 14 synchron angetrieben werden, bewegt sich der zentrisch zwischen den beiden Mitnehmerelementen 13 gehaltene Schiebedachdeckel 2 entlang der Fahrzeuglängsebene 3 gerade und bezüglich des Fahrzeugdaches mittig nach hinten, wobei sich der Lagerbolzen 34 und die Schwenkachse 26 jeder Lenkeranordnung 4, 5 auf einer jeweiligen Geraden 41 bewegen (siehe Fig. 2).

Die Erstreckung des Führungsschlitzes 25 in Querrichtung (y-Richtung) bzw. die Größe des Radius bestimmen die maximal mögliche y-Bewegung des Lagerzapfens 17 und damit die maximal mögliche Annäherung der Führungsschiene 12 gegen die Fahrzeuglängsebene 3. Ein Führungsschlitz 25 mit größerem Radius gestattet somit eine größere gegenseitige Annäherung der beiden sich gegenüberliegenden Führungsschienen 12.

Durch den gegenseitigen Versatz des Lagerzapfens 17 und des Haltezapfens 36 um einen Winkel von 90° stehen die beiden Tangenten an den zwei kreisbogenförmigen Führungsschlitzen 25 und 38 in den jeweiligen Positionen der beiden Zapfen 17 und 36 bzw. der Rollen 19 und 37 bei jeder Schwenkstellung des Schwenklenkers 33 senkrecht zueinander. Dadurch können beim Öffnen des Schiebedachdeckels 2 auf diesen eingeleitete Querkräfte, die über die Lagerplatte 24 auf die am Schwenklenker 33 gelagerten Rollen 19 und 37 eingeleitet werden, an den Führungsschlitzen 25 und 38 abgestützt werden, so daß derartige Kräfte nicht zu einem Verschwenken des Schwenklenkers 33 und zu einem seitlichen Verschieben des Schiebedachdeckels 2 aus der mittigen Symmetrielage führen.

Der Schiebedachdeckel 2 kann über eine zusätzliche Führungseinrichtung 42 am Fahrzeugdach geführt sein. Diese Führungseinrichtung 42 enthält beispielsweise eine unterhalb des Deckels 2 in der Deckelmitte entlang der Fahrzeuglängsebene 3 angebrachte Führungsschiene 43 (siehe Fig. 2), in der ein Lagerbock 44 verschiebbar aufgenommen ist, der am Dach hinter der Dachöffnung 8 angebracht ist. Beim Öffnen des Schiebedachdeckels 2 gleitet die Führungsschiene 43 am Lagerbock 44 nach hinten und wird von diesem geführt.

Um eine möglichst kleine Lagerplatte 24 verwenden zu können, weist der zweite Führungsschlitz 38 einen kleineren Radius auf wie der erste Führungsschlitz 25, jedoch kann er auch denselben Radius haben und mit diesem zusammenfallen.

Die Fig. 6a bis 6c zeigen weitere Ausführungsbeispiele von Schiebedachdeckeln, die von der üblichen Rechteckform deutlich abweichen und zumindest zwei seitliche nichtparallele Führungen aufweisen.

Der in Fig. 6a schematisch dargestellte Schiebedachdeckel 2 enthält zwei vordere Lenkereinrichtungen 4 und 5 der voranstehend beschriebenen Art sowie zwei hintere Lenkereinrichtungen 4' und 5', die entsprechend den vorderen Lenkereinrichtungen aufgebaut sind. Die hinteren Lenkereinrichtungen 4' und 5' sind an den Führungsschienen der vorderen Lenkereinrichtungen gelagert oder sie weisen eigene Führungsschienen auf.

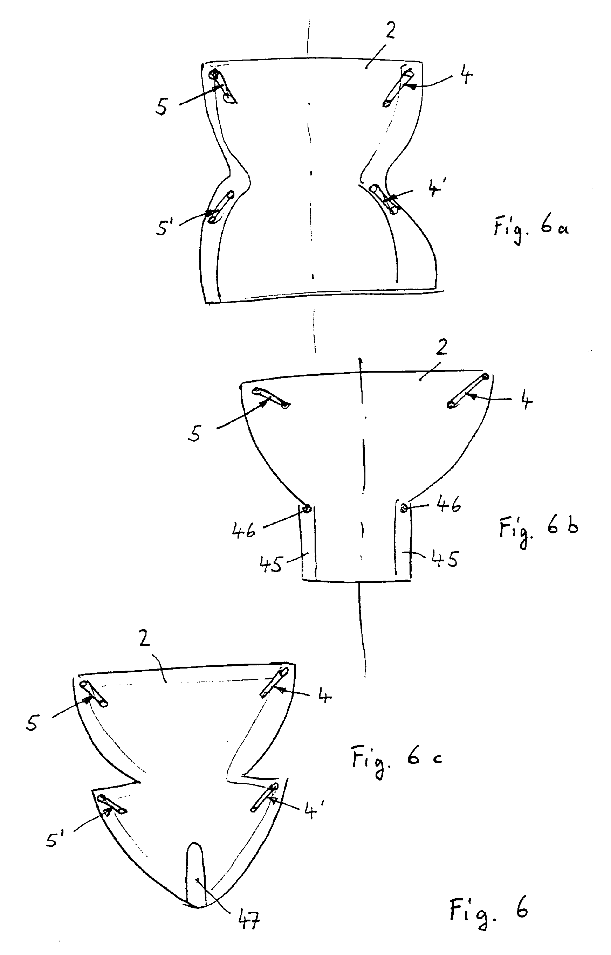

Der in Fig. 6b schematisch dargestellte Schiebedachdeckel 2 enthält zwei vordere Lenkereinrichtungen 4 und 5 der voranstehend beschriebenen Art sowie zwei hintere Führungen an parallelen Führungsschienen 45, an denen dachfeste Lagerelemente 46 verschiebbar gelagert sind.

Der in Fig. 6c schematisch dargestellte Schiebedachdeckel 2 enthält zwei vordere Lenkereinrichtungen 4 und 5 der voranstehend beschriebenen Art sowie zwei hintere Lenkereinrichtungen 4' und 5', die entsprechend den vorderen Lenkereinrichtungen 4 und 5 aufgebaut sind und an eigenen Führungsschienen verschiebbar gelagert sind. Zusätzlich kann eine hintere mittige Linearführung 47 vorgesehen sein, die ein dachfestes Widerlager aufweist.

### Bezugszeichenliste

- 1: Dachstruktur
- 2: Schiebedachdeckel
- 3: Fahrzeuglängsebene
- 4: rechte Lenkeranordnung
- 5: linke Lenkeranordnung
- 6: rechte Längsführung
- 7: linke Längsführung
- 8: Dachausschnitt
- 9: Dachrahmen-Vorderteil
- 10: Dachrahmen-Seitenteil
- 11: Dachrahmen-Seitenteil
- 12: Führungsschiene
- 13: Mitnehmerelement
- 14: Antriebskabel
- 15: Antriebsmotor
- 16: Hubelement
- 17: Lagerzapfen
- 18: Blechbiegeteil
- 19: Gleitelement
- 20: Nut
- 21: Schulter
- 22: Eckbereich
- 23: Deckelunterseite
- 24: Lagerplatte
- 25: Führungsschlitz
- 26: Kreismittelpunkt
- 27: Vorderrand
- 28: äußeres Ende
- 29: Deckelrand
- 30: inneren Ende
- 31: Erweiterung
- 32: Gleitbahn
- 33: Schwenklenker
- 34: Lagerbolzen
- 35: Schenkel
- 36: Haltezapfen
- 37: zweite Rolle
- 38: Führungsschlitz
- 39: Ende
- 40: Rahmendichtung
- 41: Gerade
- 42: Führungseinrichtung
- 43: Führungsschiene
- 44: Lagerbock
- 45: Führungsschiene
- 46: Lagerelement
- 47: Linearführung

## Patentansprüche

1. Fahrzeugdach mit einem an Führungen (6, 7, 12) längs verschiebbar gelagerten Deckel (2) zum wahlweisen Schließen oder zumindest teilweisen Öffnen einer Dachöffnung (8), wobei jeweils eine mit dem Deckel (2) gekoppelte Lagervorrichtung (4, 5) an der jeweiligen Führung (6, 7, 12) verschiebbar gelagert und von einem Antrieb (15) antreibbar ist und die Führungen (6, 7, 12) zumindest abschnittsweise nichtparallel zueinander verlaufen,
**dadurch gekennzeichnet,**
**daß** jede Lagervorrichtung einen Schwenklenker (33) aufweist, der einerseits am Deckel (2) um eine deckelfeste Schwenkachse (26, 34) schwenkbar gelagert und andererseits mit einem Mitnehmerelement (13) gekoppelt ist, das an der jeweiligen seitlich der Dachöffnung (8) angeordneten Führung (6, 7, 12) verschiebbar gelagert und von dem Antrieb (15) antreibbar ist.

2. Fahrzeugdach nach Anspruch 1,
**dadurch gekennzeichnet, daß** ein den Deckel (2) lagerndes Lagerteil (17) des Mitnehmerelements (13) in einer deckelfesten Ausgleichsführung (25) verschiebbar aufgenommen ist.

3. Fahrzeugdach nach Anspruch 2,
**dadurch gekennzeichnet, daß** die deckelfeste Ausgleichsführung eine konzentrisch zur deckelfesten Schwenkachse (26, 34) angeordnete Kreisbogenführung (25) ist.

4. Fahrzeugdach nach einem der Ansprüche 1 bis 3,
**dadurch gekennzeichnet, daß** der Schwenklenker (33) über ein weiteres Gleitelement (37) an einer kreisbogenförmigen, zur Schwenkachse (26, 34) konzentrischen Führungsbahn (38) geführt ist.

5. Fahrzeugdach nach Anspruch 4,
**dadurch gekennzeichnet, daß** das weitere Gleitelement (37) um einen Winkel von etwa 90° bezüglich der Schwenkachse (26) gegenüber dem ersten Gleitelement (19) versetzt angeordnet ist.

6. Fahrzeugdach nach einem der Ansprüche 1 bis 5,
**dadurch gekennzeichnet, daß** der Deckel (2) mittels zumindest einer zusätzlichen Lagereinrichtung (4', 5'; 42) am Fahrzeugdach verschiebbar gelagert ist.

7. Fahrzeugdach nach Anspruch 6,
**dadurch gekennzeichnet, daß** die zusätzliche Lagereinrichtung des Dekkels (2) eine Längsführung ist.

8. Fahrzeugdach nach einem der Ansprüche 2 bis 7,
**dadurch gekennzeichnet, daß** das Lagerteil (17) am Mitnehmer (13) vertikal verschiebbar gelagert ist und eine Führungsschiene (12) der Führung (6, 7) einen ersten ansteigenden Bahnabschnitt (21) zum Anheben des Lagerteils (17) aufweist.

9. Fahrzeugdach nach einem der Ansprüche 1 bis 8,
**dadurch gekennzeichnet, daß** die rechte und die linke Führung (6, 7) bzw. die Lagereinrichtung (4, 5) spiegelsymmetrisch zur Fahrzeuglängsachse (3) angeordnet sind.
